# EUROPÄISCHE PATENTANMELDUNG

(11) **EP 0 837 385 A1**
(43) Veröffentlichungstag der Anmeldung: **22.04.1998**
(21) Anmeldenummer: 97117954.4
(22) Anmeldetag: 16.10.1997
(51) Int. Cl.: G06F 1/16

(54) **Verfahren und Vorrichtung zur Übertragung von Daten zwischen einem Rechner (Notebook) und einem Drucker, die transportabel in einem Koffer angeordnet sind**

(30) Priorität: 16.10.1996 DE 19642767
(71) Anmelder: Com-Case Schadt OHG, 82538 Geretsried (DE)
(72) Erfinder: Schadt, Herbert, 82538 Geretsried (DE)
(74) Vertreter: Nöth, Heinz, Dipl.-Phys.

(57) **Zusammenfassung**

Ein Verfahren und eine Vorrichtung zur Übertragung von Daten zwischen einem Rechner (Notebook) (1) und einem Drucker (14), die in einem Koffer transportabel angeordnet sind, wobei der Rechner aus dem Koffer lösbar ist und an der Seite des aus dem Koffer entfernten Rechners (Notebooks) (1) die zu übertragenden Daten in einen seriellen Bitstrom gewandelt werden und eine Trägerfrequenz mit dem seriellen Bitstrom moduliert wird und die modulierte Trägerfrequenz mit Infrarotstrahlung von der Rechnerseite gesendet wird und die gesendete Infrarotstrahlung an einer Reflexionsfläche (15) reflektiert und an der Seite des im Koffer verbliebenen Druckers (14) empfangen wird und die von der Infrarotstrahlung übertragenen Daten in Druckbefehlsignale gewandelt werden.

## Beschreibung

Die Erfindung betrifft ein Verfahren nach dem Oberbegriff des Patentanspruches 1 und eine Vorrichtung nach dem Oberbegriff des Patentanspruches 5.

Ein derartiges Verfahren und eine derartige Vorrichtung sind aus der DE 44 11 156 C2 bekannt. Hierbei werden Daten zwischen einem Rechner (Notebook) und einem Drucker, welche transportabel in einem Koffer angeordnet sind, übertragen. Die Übertragung erfolgt in herkömmlicher Weise mit Hilfe von Kabeln. In täglichem Gebrauch ergeben sich dabei insbesondere Schwierigkeiten, wenn der Rechner (Notebook) aus dem Koffer entnommen wird und an einem anderen Ort, beispielsweise auf einem Tisch, abgelegt wird, während der Koffer mit dem darin verbliebenen Drucker an einer anderen Stelle, beispielsweise am Boden eines Zimmers, abgestellt wird. Durch die Verbindungskabel zwischen dem Notebook und dem Drucker besteht die Gefahr des Hängenbleibens, so daß bei Unachtsamkeiten des Benutzers oder anderer Personen an den Verbindungskabeln hängengeblieben und das Notebook vom Tisch gerissen wird.

Aufgabe der Erfindung ist es daher, ein Verfahren und eine Vorrichtung der eingangs genannten Art zu schaffen, bei welcher bei aus dem Koffer entnommenen und an einem anderen Platz als der Koffer mit dem darin befindlichen Drucker angeordnetem Rechner (Notebook) eine problemlose Datenübertragung zwischen dem Rechner und dem zugeordneten Drucker erreicht wird.

Diese Aufgabe wird beim Verfahren erfindungsgemäß durch die kennzeichnenden Merkmale des Patentanspruches 1 und bei der Vorrichtung durch die kennzeichnenden Merkmale des Patentanspruches 5 gelöst.

Die Erfindung besteht zur Lösung des speziellen Problems bei in einem Koffer transportablen Notebook und zugeordnetem Drucker in der kombinatorischen Zusammenwirkung der folgenden Merkmale. An der Seite des aus dem Koffer entfernten Rechners (Notebooks) werden die zu übertragenden Daten in einem seriellen Bitstrom gewandelt, eine Trägerfrequenz wird mit dem seriellen Bitstrom moduliert, und die modulierte Trägerfrequenz wird mit Infrarotstrahlung von der Rechnerseite aus gesendet. In bevorzugter Weise wird der serielle Bitstrom durch Puls-Abstandsmodulation, z.B. mittels kurzer energiereicher Sendeimpulse, übertragen. Ferner sind die funktionellen Bausteine, welche die Umwandlung der Daten in einem seriellen Bitstrom, die Modulierung der Trägerfrequenz und das Senden der modulierten Trägerfrequenz mit Infrarotstrahlung durchführen, in bevorzugter Weise in einem einzigen Baustein, welcher im folgenden mit Rechner-Modul bezeichnet wird, angeordnet. An der Druckerseite erfolgt der Empfang der infraroten Strahlung und die Rückwandlung der von der Infrarotstrahlung übertragenen Daten in Druckbefehlsignale für den Drucker.

Damit der im Koffer verbliebene Drucker auch ohne Sichtverbindung zum Rechner in einem Raum, z.B. Büroraum oder Zimmer, die von der Seite des Rechners aus gesendeten Daten empfangen kann, wird die gesendete Infrarotstrahlung an einer Fläche bevorzugt an einer den Raum (Zimmer) nach oben abschließenden Decke reflektiert. Hierzu wird die die Daten enthaltende Infrarotstrahlung nach oben zur Decke hin gestrahlt, beispielsweise mit einem Öffnungswinkel von ca. 30°. Die bestrahlte Fläche bildet eine Reflexionsfläche, welche die Strahlung reflektiert. Die nach oben gerichtete Empfangseinrichtung an der Druckerseite empfängt die reflektierte Infrarotstrahlung, welche die zu übertragenden Daten enthält. Dabei kann die Abstrahlfläche in beliebige bevorzugt einstellbare Winkel, welche eine optimale Übertragung gewährleisten, zur Decke geneigt sein.

Zur Erhöhung der Übertragungsgeschwindigkeit der Daten ist es von Vorteil, die Daten vor ihrer Wandlung in den seriellen Bitstrom zu komprimieren. Die Trägerfrequenz, welche mit der Infrarotstrahlung mit Hilfe von Infrarotdioden gesendet wird, wird dann mit dem komprimierten seriellen Bitstrom bevorzugt zusammen mit einem Protokoll übertragen.

In bevorzugter Weise werden mehrere, insbesondere drei und mehr, z.B. 12, Sendedioden (Infrarotdioden), welche als Leistungsdioden (1 A Stromstärke) ausgebildet sind, zum Einsatz gebracht. Die Wellenlänge der Infrarotstrahlung beträgt bevorzugt 950 nm, wobei jede Infrarotdiode eine Strahlungsleistung von etwa 50 mW aufweist.

Die erfindungsgemäße drahtlose Datenübertragung erfolgt von einer Standard-Parallelschnittstelle an der Rechnerseite zu einer Standard-Parallelschnittstelle an der Druckerseite. Sowohl an der Rechnerseite als auch an der Druckerseite übernimmt ein Mikroprozessor die Steuerung der Schnittstellensignale.

Die Rechnerschnittstelle verwendet ein einfaches Protokoll zur Kommunikation mit dem Drucker sowie zur Sicherung der Datenübertragung. Die Rückmeldung erfolgt bei jeder erkannten Infrarotübertragung und gewährleistet eine Kommunikation mit der Rechnerschnittstelle.

Die Stromversorgung auf der Rechnerseite (Rechner und Rechnermodul) erfolgt über bevorzugt im Rechnermodul eingebaute Akkumulatoren, die bei der Anordnung des Rechners im Koffer aufgeladen werden können. Hierzu ist eine automatische Ladeabschaltung mit Erhaltungsladen vorgesehen.

Wenn der Rechner ausgeschaltet ist, wird auch das Rechnermodul unabhängig von der Stellung eines Ein/Ausschalters am Rechnermodul ausgeschaltet. Bei niedriger Akkumulatorenspannung kann bei gleichzeitiger Leuchtdiodenwarnung eine automatische Abschaltung des Rechners und des zugeordneten Rechnermoduls erfolgen.

An der Druckerseite (Drucker und zugeordnetes Druckermodul) erfolgt die Stromversorgung über Druckerakkumulatoren. Die Ein/Ausschaltung des Druckermoduls erfolgt über die Druckerversorgung. Auf der Druckerseite ist neben einer an die Empfängereinrichtung angeschlossenen Empfängerschaltung zusätzlich eine Sendeeinrichtung in Form von Leuchtdioden (Infrarotleuchtdioden) vorgesehen. Mit Hilfe dieser Sendeeinrichtung kann einer entsprechenden Empfangseinrichtung an der Rechnerseite mit Hilfe einer ebenfalls reflektierten Infrarotstrahlungsübertragung mitgeteilt werden, daß der Druckvorgang der übertragenen Daten einwandfrei erfolgt. Dies kann mit Hilfe eines vorgegebenen Datenstroms (einfaches Protokoll) und mit Hilfe einer an der Rechnerseite vorgesehenen Leuchtdiodenanzeige überwacht werden. Diese Anzeige gibt an, ob die Datenübertragung einwandfrei empfangen und ausgedruckt werden. Es ist daher kein Testdruckvorgang erforderlich. Diese Anzeige kann auch an der Druckerseite vorgesehen sein.

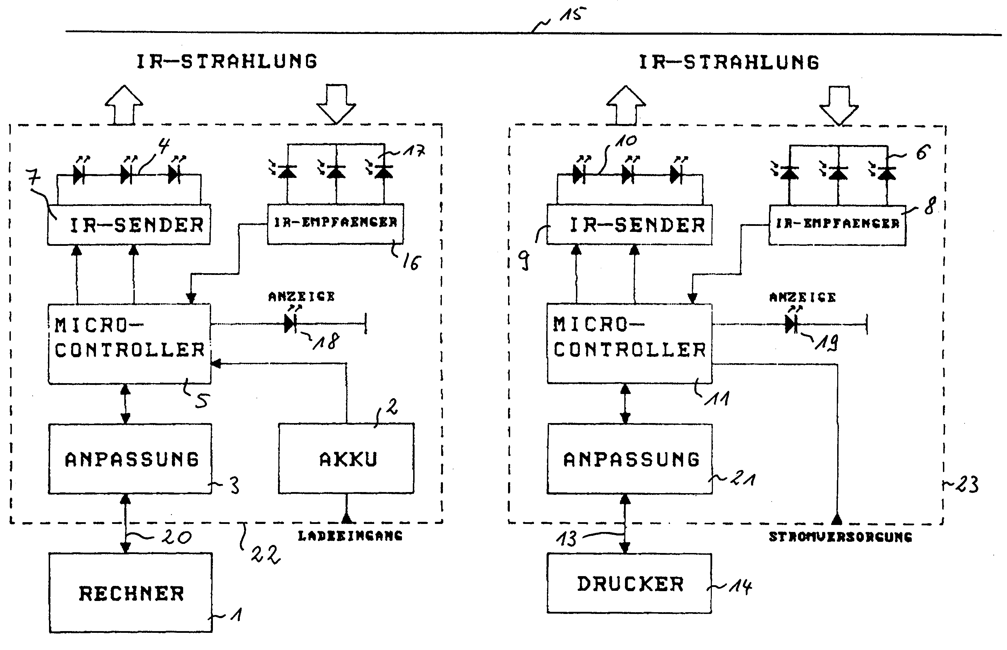

Anhand der Figur wird an einem Ausführungsbeispiel die Erfindung noch näher erläutert. Die Figur zeigt ein Blockschaltbild der Datenübertragungseinrichtung und schematisch das drahtlose Übertragungssystem.

Ein Rechner (Notebook) 1 ist über eine Schnittstelle 20 mit einem Rechnermodul 22 verbunden. Der Rechner 1 und das Rechnermodul 22 sind lösbar in einem Koffer angeordnet. Zur lösbaren Befestigung können Befestigungsmittel dienen, wie sie beispielsweise aus der DE 44 11 156 C2 bekannt sind.

Das Rechnermodul 22 besitzt eine Infrarotsendeeinrichtung 7. Diese kann beispielsweise aus drei Infrarotleuchtdioden 4 aufweisen. Mit Hilfe der Infrarotsendeeinrichtung 7 werden vom Rechner 1 gelieferte Daten an eine Empfangseinrichtung 8, welche an einem Druckermodul 23 vorgesehen ist, wie im einzelnen noch erläutert wird, übertragen. Die übertragenen Daten werden von einem an das Druckermodul 23 an der Schnittstelle 13 angeschlossenen Drucker 14 gedruckt.

Um die Daten mit einer hinreichend niedrigen Übertragungsgeschwindigkeit übertragen zu können, werden die vom Rechner 1 gelieferten Daten angepaßt (Anpassung 4). Hierzu werden die Daten zunächst komprimiert. Dies erfolgt in herkömmlicher Weise, beispielsweise durch Quellenkodierung. Die komprimierten Daten werden dabei in einen komprimierten seriellen Daten-Bitstrom gewandelt. Die Emulation der Schnittstelle 20, die Steuerung der Datenkompression und die Wandlung der Daten in den komprimierten seriellen Bitstrom werden von einem Mikroprozessor 5 gesteuert. Diese Funktionseinheiten befinden sich im Rechnermodul 22.

Die Sendeeinrichtung 7 enthält einen Oszillator, der eine Trägerfrequenz geliefert, welche vom komprimierten seriellen Bitstrom moduliert wird. Mit der modulierten Trägerfrequenz wird die Infrarotsendeeinrichtung 7 gesteuert. Es kann Frequenz- oder Amplitudenmodulation oder auch der Takt der impulsweisen Aussendung der Infrarotstrahlung durch die Dioden 4 moduliert werden.

Die Infrarotleuchtdioden 4, insbesondere drei Infrarotleuchtdioden, welche beispielsweise in einem Öffnungswinkel von etwa 30° die modulierte Trägerfrequenz in Richtung zu einer reflektierenden Fläche 15 hin aussendet. Die reflektierende Fläche 15 ist in einem geschlossenen Raum, z.B. Büroraum oder einem anderen Zimmer, bevorzugt die den Raum nach oben hin abschließende Decke, welche im wesentlichen waagrecht verläuft. Die Leuchtdioden besitzen eine solche Strahlleistung, daß die zu übertragenden Daten einwandfrei bei der Empfängereinrichtung 8 an der Druckerseite ankommen. Die Infrarotempfangseinrichtung 8 kann Phototransistorenflächendioden, Quadrantendioden oder Pindioden für den Empfang der reflektierten Strahlung aufweisen. Für den Empfang der insbesondere von einer Raumdecke als Reflexionsfläche 15 reflektierten Infrarotstrahlung sind die Empfangselemente 6 der Infrarotempfängereinrichtung 8 nach oben in Richtung zur Decke gerichtet. Durch Demodulation erfolgt die Rückführung der komprimierten Daten in einen Bitstrom. Der serielle Bitstrom wird in komprimierte Daten zurückgewandelt, die entkomprimiert werden. Die so rückgewandelten Daten werden über die Schnittstelle 13 dem Drucker 14 zugeleitet, in welchem die Daten in entsprechende Druckbefehlsignale umgewandelt und gedruckt werden. Diese Rückführung (Anpassung) auf das ursprüngliche Datenformat erfolgt in einer vom Mikroprocessor 11 gesteuerten Funktionseinheit 21. Die Steuerung der Rückwandlung des seriellen komprimierten Bitstromes in die komprimierten Daten sowie die Datenentkomprimierung und die Emulation der Schnittstelle 13 erfolgen durch einen Mikroprozessor 11. Ferner kann im Druckermodul 23 eine Empfangskontrolle vorgesehen sein, die an die Infrarotempfängereinrichtung angeschlossen ist. Diese Funktion kann vom Mikroprocessor 11 ausgeführt werden. Die Empfangskontrolle überprüft den vorgegebenen Datenstrom des Protokolls, welches zusammen mit den Daten durch die reflektierte Infrarotstrahlung übertragen worden ist. Wenn der vorgegebene Datenstrom mit dem empfangenen Datenstrom übereinstimmt, wird von der Empfangskontrolle eine an der Druckerseite insbesondere am Druckermodul 23 vorgesehene Infrarotsendeeinrichtung 9 mit Sendedioden 10 entsprechend angesteuert, so daß diese eine Infrarotstrahlung in Richtung der reflektierenden Fläche 15, z.B. ein Raum, nach oben aussendet. Von dort wird die Strahlung reflektiert und von einer an der Rechnerseite insbesondere am Rechnermodul 22 vorgesehene Infrarotempfangseinrichtung 16 mit beispielsweise Infrarotphototransistoren 17 als Empfänger, empfangen und eine Anzeigeeinrichtung 18, beispielsweise Leuchtdioden, angesteuert, um die korrekte Übertragung der Daten zu protokollieren. Falls die Übertragung der Daten und des damit ausgesendeten Protokolls nicht korrekt von der Infrarotempfangseinrichtung 8 empfangen wurde, veranlaßt die Empfangskontrolle im Mikroprocessor 11 eine entsprechende Nachricht, welche, wie schon erläutert, von der Infrarotsendeeinrichtung 9 zur Infrarotempfangseinrichtung 16 gesendet wird, woraufhin eine entsprechende Anzeige durch die Anzeigeeinrichtung 18 veranlaßt wird. Auch an der Druckerseite kann eine entsprechende Anzeigeeinrichtung 19 vorgesehen sein, welche über die Korrektheit der Datenübertragung berichtet. Auch diese Anzeige kann durch Leuchtdioden vermittelt werden.

Sowohl am Rechnermodul 22 als auch am Druckermodul 23 kann ein Testschalter, beispielsweise in Form einer Drucktaste vorgesehen sein, mit welcher zum Test der Datenübertragung bei eingeschalteten Modulen 22 und 23 ohne Einleitung eines Druckvorganges eine Dummyübertragung gestartet wird. Auf beiden Seiten wird die Korrektheit der übertragenen Daten überprüft. Die Qualität der Datenübertragung kann an der jeweiligen Anzeigeeinrichtung 18 bzw. 19 vermittelt werden. Hierbei kann durch Farbabstimmung, beispielsweise bei absolut korrekter Übertragung, eine grüne Anzeige, bei leicht gestörter Dummyübertragung orange und bei unzureichender Dummyübertragung eine rote Anzeige vorgesehen sein. Hierdurch kann, bevor der eigentliche Druckvorgang eingeleitet wird, überprüft werden, ob Rechnereinrichtung bzw. Rechnermodul 22 und Druckermodul 23 bzw. die daran vorgesehenen Empfangs- und Sendeeinrichtungen in einer optimalen Stellung zu einander sind für eine ordnungsgemäße Übertragung der zu übertragenden Daten.

Das Rechnermodul 22 kann als Aufsteckmodul mit einem herkömmlichen Schnittstellenstecker (Parallelschnittstellenstecker) ausgebildet sein. Dieses Aufsteckmodul kann eingebaute Akkumulatoren 2 enthalten, welche die Stromversorgung bilden. Die Stromversorgung des Rechners kann dabei über den Schnittstellenstecker erfolgen. Die in das als Aufsteckmodul ausgebildete Rechnermodul eingebauten Akkumulatoren 2 können über eine herkömmliche Kabelverbindung aus dem Koffer geladen werden (Ladeingang am Rechnermodul 22).

Durch die Erfindung ist es möglich, drahtlos mit Hilfe von Infrarotstrahlung unter Ausnützung von Raumreflexion, insbesondere der Reflexion an einer einen Raum nach oben hin abschließenden Decke, Daten von dem Rechner 1, welcher an einem Ort steht, welcher nicht in direkter Sichtverbindung mit dem Drucker 14 ist, einwandfrei innerhalb einer Entfernung von ca. 5 m oder mehr zu übertragen. Dabei dient als Übertragungsmedium die Umgebungsluft. Auf diese Weise ist es möglich, den Rechner (Notebook) bequem auf einer Unterlagen, z.B. Schreibtisch, zu stellen und den Drucker, welcher im Koffer verbleibt, an einem geeigneten Platz abzulegen. Die Übermittlung der auszudruckenden Daten vom Rechner zum Drucker bereitet keine Schwierigkeiten. Verbindungskabel zwischen dem Drucker und dem Rechner oder Lichtwellenleiter und dergleichen sind nicht erforderlich. Als Übertragungsmedium für die zu übertragenden Daten enthaltende Infrarotstrahlung dient nur die Umgebungsluft.

## Patentansprüche

1. Verfahren zur Übertragung von Daten zwischen einem Rechner (Notebook) und einem Drucker, die in einem Koffer transportabel angeordnet sind, wobei der Rechner aus dem Koffer lösbar ist,
dadurch **gekennzeichnet,**
daß an der Seite des aus dem Koffer entfernten Rechners (Notebooks) die zu übertragenden Daten in einen seriellen Bitstrom gewandelt werden, eine Trägerfrequenz mit dem seriellen Bitstrom moduliert wird und die modulierte Trägerfrequenz mit Infrarotstrahlung von der Rechnerseite gesendet wird, daß die gesendete Infrarotstrahlung reflektiert und an der Seite des im Koffer verbliebenen Druckers empfangen wird und die von der Infrarotstrahlung übertragenen Daten in Druckbefehlsignale gewandelt werden.

2. Verfahren nach Anspruch 1, dadurch gekennzeichnet, daß die Daten vor ihrer Wandlung in den seriellen Bitstrom komprimiert werden.

3. Verfahren nach Anspruch 1 oder 2, dadurch gekennzeichnet, daß die Infrarotstrahlung von der Rechnerseite aus in eine Richtung nach oben gesendet und von dort nach unten zur Druckerseite reflektiert wird.

4. Verfahren nach einem der Ansprüche 1 bis 3, dadurch gekennzeichnet, daß die Infrarotstrahlung mit einem Öffnungswinkel von ca. 30° in Richtung zu einer einen Raum nach oben hin begrenzenden Decke gesendet und von dort reflektiert wird.

5. Vorrichtung zur Übertragung von Daten zwischen einem Rechner (Notebook) und einem Drucker, welche in einem Koffer angeordnet sind und von denen zumindest der Rechner lösbar im Koffer montiert ist,
dadurch **gekennzeichnet,**
daß an der Rechnerseite ein Prozessor (5), der die zu übertragenden Daten in einen seriellen Bitstrom wandelt, ein Modulator, welcher eine Trägerfrequenz mit dem Bitstrom moduliert, und eine Infrarotsendeeinrichtung (7), welche die modulierte Trägerfrequenz mit einer Infrarotstrahlung in Richtung zu einer reflektierenden Fläche (15) sendet, vorgesehen sind und daß an der Druckerseite eine Infrarotempfangseinrichtung (8), welche die reflektierte Infrarotstrahlung empfängt und eine daran angeschlossene Rückwandlungseinrichtung (11, 21) zum Rückwandeln der in der Infrarotstrahlung enthaltenen Information in die auszudruckenen Daten vorgesehen sind.

6. Vorrichtung nach Anspruch 5, dadurch gekennzeichnet, daß dem Prozessor (5), welcher die Daten in den seriellen Bitstrom wandelt, eine Datenkomprimiereinrichtung, welche die zu übertragenen Daten komprimiert, vorgeschaltet ist.

7. Vorrichtung nach Anspruch 5 oder 6, dadurch gekennzeichnet, daß die Datenkomprimiereinrichtung, der Mikroprozessor (5), der Modulator und die Infrarotsendeeinrichtung (7) in einem Rechnermodul (22) vorgesehen sind, welches über eine emulierte Schnittstelle (20) mit dem Rechner (1) verbunden ist.

8. Vorrichtung nach Anspruch 7, dadurch gekennzeichnet, daß das Rechnermodul (22) als Steckmodul mit einem Schnittstellenstecker ausgebildet ist.

9. Vorrichtung nach Anspruch 8, dadurch gekennzeichnet, daß das Rechnermodul (22) Akkumulatoren (2) zur Stromversorgung des Rechnermoduls und des Rechners (1) über den Schnittstellenstecker aufweist.

10. Vorrichtung nach Anspruch 5 oder 6, dadurch gekennzeichnet, daß der Infrarotstrahlungsempfänger (8) und die Bausteine (11, 21) zur Rückwandlung der von der Infrarotstrahlung übertragenen Daten in einem über eine Schnittstelle (13) an den Drucker (14) anschließbaren Druckermodul (23) vorgesehen sind.

11. Vorrichtung nach einem der Ansprüche 5 bis 10, dadurch gekennzeichnet, daß eine ständig mitlaufende Empfangskontrolle vorgesehen ist, welche einen Datenstrom, der mit einem mit den übertragenen Daten mit übertragenen Protokoll empfangen wird, erfaßt, und daß die Empfangskontrolle ein entsprechendes Signal zur Rechnerseite sendet, das durch eine Anzeige (18) angezeigt wird.

12. Vorrichtung nach einem der Ansprüche 1 bis 11, dadurch gekennzeichnet, daß eine Testübertragung von vorgegebenen Daten (Dummyübertragung) einschaltbar ist und daß durch die Anzeigevorrichtungen (18, 19) an der Rechner- und/oder Druckerseite eine Anzeige zur Übertragungsgüte bei bestimmter räumlicher Zuordnung der Sende- und Empfangseinrichtungen (4, 6, 10, 17) an der Rechnerseite und der Druckerseite, insbesondere durch Farbinformationen, vorgesehen ist.
